# EUROPEAN PATENT SPECIFICATION

(11) **EP 3 819 776 B1**
(45) Date of publication and mention of the grant of the patent: **29.12.2021**
(21) Application number: 20167510.5
(22) Date of filing: 01.04.2020
(51) Int. Cl.: G06F 13/24, G06F 13/42

(54) **METHOD AND APPARATUS FOR ABORTING BLOCKED BUS ACCESS BETWEEN A MASTER CONTROLLER AND CONNECTED PERIPHERALS**
VERFAHREN UND VORRICHTUNG ZUM ABBRECHEN DES BLOCKIERTEN BUSZUGRIFFS ZWISCHEN EINER HAUPTSTEUERUNG UND ANGESCHLOSSENEN PERIPHERIEGERÄTEN
PROCEDE ET APPAREIL PERMETTANT D'INTERROMPRE L'ACCES BLOQUE AU BUS ENTRE UN CONTROLEUR MAITRE ET LES PERIPHERIQUES CONNECTES

(30) Priority: 05.11.2019 EP 19207167
(43) Date of publication of application: 12.05.2021
(73) Proprietor: Shenzhen Goodix Technology Co., Ltd., Shenzhen, Guangdong 518045 (CN)
(72) Inventor: Porst, Uwe, 01129 Dresden (DE); von Borany, Andreas, 01768 Glashütte (DE)
(74) Representative: Lippert Stachow Patentanwälte Rechtsanwälte Partnerschaft mbB

(56) References cited:
- US-A1- 2006 031 614
- US-A1- 2016 217 090

## Description

The invention relates to a method for aborting blocked bus access between a master controller and connected peripherals communicating via a bus protocol over a bus and an apparatus performing the inventive method.

Common System on Chip (SoC) comprises controller (micro-controller, RISC, DSP) and peripherals, such as memories or I/O devices, connected via a common infrastructure, called bus (e.g. ARM AHB - ARM Advanced High-performance Bus). The peripherals are mostly slaves in the SoC.

US2016217090 A1 is disclosing a method for access between a master controller and connected peripherals communicating via a bus protocol, the method comprising the following steps: an interrupt event message is sent to the master controller for starting an interrupt service routine, whereas the interrupt event message is also sent to a connected peripheral, the master controller jumps into the interrupt service routine and after leaving the interrupt service routine the master controller jumps back to a main routine.

The micro-controller, also called master controller, is the master of the SoC and controls the peripherals via the bus. The peripheral controlling is done by read or by write bus access. The read and write access of the peripherals is defined in a bus protocol. There are different bus protocols on the market and they are standardized, e.g. the ARM AHB protocol. Some bus protocols do not support aborting bus accesses initiated by the master. There are protocols which block the transfer too, i.e., the master waits until the slave sends back a response. This bus blocking leads to long processor idle time too.

The following scenario is intended to show the disadvantages, especially for real-time applications, which occur with the previous communication via bus protocols between a master micro-controller of a System on Chip (SoC) and peripheral devices as slaves.

A master micro-controller initiates a bus access to a slave peripheral. The peripheral blocks the bus access to the bus for unknown time and unknown reason. In the meantime, the master micro-controller gets an interrupt message and has to react as possible. The master micro-controller has to access in his interrupt service routine to peripherals connect but the bus is blocked by a peripheral, because a previous read or write by the peripheral, initiated by the master micro-controller, has not finished, yet. The master micro-controller has to wait until the blocking peripheral releases the bus to serve its interrupt routine. The unknown blocking time disturbs real time applications and requirements.

It is therefore desirable to indicate and specify a method by which a bus access by peripherals can be terminated and a master controller of the SoC gets back the access to the connected peripherals also in case of an interrupt service routine.

The objective of the invention will be solved by a method for aborting blocked bus access between a master controller of a System on chip and connected peripherals communicating via a bus by a bus protocol, wherein the method comprising the following steps:
- an interrupt event message is sent to the master controller for starting an interrupt service routine, whereas the interrupt event message is also sent to a connected peripheral which blocks the bus,
- the master controller jumps into the interrupt service routine and
- the peripheral aborts its bus access and unblocks the bus by sending an abort interrupt message to the master controller, and
- the master controller accesses the unblocked bus for serving the interrupt service routine, and
- after leaving the interrupt service routine the master controller jumps back to a main routine.

The central idea of the inventive method is that the master controller cannot abort its own initiated transfer but the slaves in the System on chip can do it. So, the inventive method permits that not only the master controller gets an indication of an interrupt service routine but also each peripheral of the SoC. It is important that in every constellation the bus protocol is fulfilled. Finally, the peripheral which blocks the bus, unblocks the bus by sending an abort interrupt message to the master controller, so that the master controller can access the bus by itself and serving the interrupt service routine before the master controller jumps back to a main routine. Without the invention it is not possible to handle real time protocols running on a SoC controller with peripherals which have unknown bus access time.

Hence in a variant of the inventive method, in case of a bus read access from the peripheral, the peripheral returns dummy data into a cache memory of the master controller which are not valid. This has the advantage that the bus protocol is fulfilled because no error response is send back and the master controller does not need to handle the error response.

In a further variant of the inventive method, a dedicated bus error response is sent by the peripherals if such a response is expected by the master controller. Thus, the master controller knows when there is no more hardware interrupt left in an interrupt controller of the master controller. If an external interrupt controller is used, then the master controller saves instructions for reading out interrupt controller states as well as to clear the interrupt source. The master decides if he expects a bus error response from the peripherals. The peripherals comprise a control register for this feature.

In another variant of the inventive method, in case of a bus write access by the peripheral, the peripheral throws away the data. This has the advantage that the bus protocol is fulfilled because the peripheral knows that the data are not valid and therefore it is not required to send back an error response.

The advantage of the inventive method can be seen therein, that the master controller can perform a bus access in real time without violating the bus protocol and the master controller can access every peripheral which is necessary in order to perform the interrupt service routine or which becomes necessary due to the interrupt service routine.

In a further variant of the inventive method the abort interrupt message initiates an abort interrupt service routine, whereas the master controller invalidates a last cache memory entry. This has the advantage that the master controller can jump back to the main routine without complex restore routines of the program sequence before the termination of the blocked peripheral access.

In another variant of the inventive method, an interrupt event triggering the interrupt event message can be a watchdog signal. The watchdog signal has to be connected via the IRQ enable module to a peripheral.

The inventive method can be applied to different bus protocols like Advanced High-performance Bus - AHB - protocol or a wireless protocol for NB-IoT or APB (ARM), Whishbone (Opencore), STBus (STMicroelectronics).

The object of the invention is solved by an apparatus which is suitable to perform the method according to claim 1 to 6. The apparatus comprises a master controller connected to more than one peripherals via a bus using a bus protocol for communication, whereas the master controller comprises an internal cache to which the peripherals are connected via a same port and wherein the master controller and peripherals are connected via interrupt lines.

In a variant of the inventive apparatus, the apparatus comprises an additional mask module for enabling or disabling an interrupt source of peripherals, whereas the peripherals are connected via a masked interrupt line to the mask module. The mask module is connected to the master controller and transfers un-masked interrupts to the master controller. This has the advantage that the master controller recognizes all interrupts, but has the control to decide which of the connected interrupt lines is used to terminate a blocked bus accesses or not.

In another variant of the inventive apparatus, the peripheral comprises a control register for enabling a dedicated bus error response if expected by the master controller. So, the peripheral is able to send a dedicated bus error response to the master. This is advantageous in case of the interrupt controller of the master controller has no more interrupt input left or the master controller is cable to process dedicated bus errors.

In a further very preferred variant the apparatus comprises more than one master controller. Multiple masters share one slave. The triggering event of each master can be combined (simple or gate) and the peripheral reacts as described above. The interrupt signal of the peripheral is connected than to each master.

The invention will be explained in more detail using exemplary embodiments.

The appended drawings show
- Fig. 1: A schematic view of a system on chip according to the invention;
- Fig. 2: An exemplary embodiment of a system on chip according to the invention;
- Fig. 3: A timeline of an interrupt routine performed by the inventive apparatus according to the inventive method;
- Fig. 4: A second embodiment of the inventive apparatus.

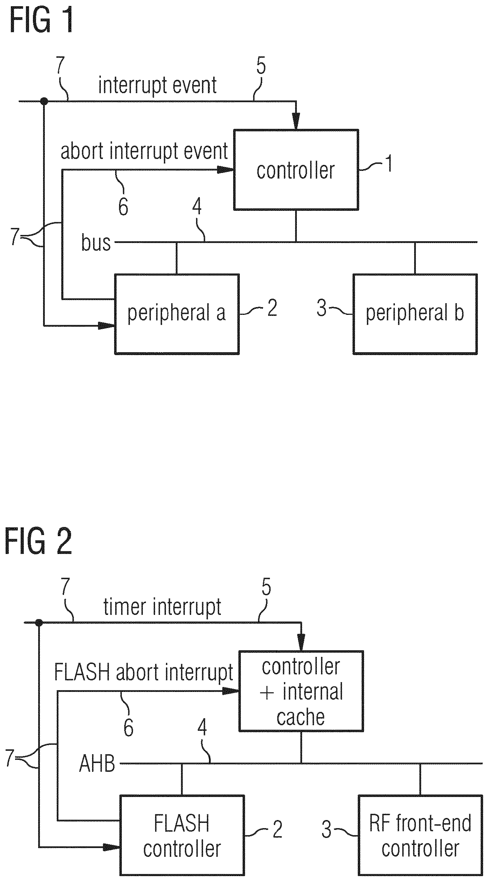

Figure 1 shows a System on Chip (SoC) comprising a master controller 1, two peripherals A 2 and B 3 and a bus 4. The master controller 1 performs in its main routine a bus access to peripheral A 2. The bus access is blocked for an unknown time by peripheral A 2. In the meantime, an interrupt event 5 occurs and the master controller 1 jumps into an interrupt service routine. In the interrupt service routine, the master controller 1 has to access peripheral B 3. Without the inventive method and apparatus, the master controller 1 has to wait, until the bus access is finished by peripheral A 2. According to the invention the peripheral A 2 gets the interrupt event 5 too. The peripheral A 2 serves then the bus access and unblocks the bus 4. In case of a bus read access peripheral A 2 returns "dummy data", which are not valid. In case of a write bus access, the peripheral A 2 throws away the data. At the end of the bus operation peripheral A 2 returns an interrupt to the master controller 1. After this operation the master controller 1 can access peripheral B 3, when it is necessary due to the interrupt service routine.

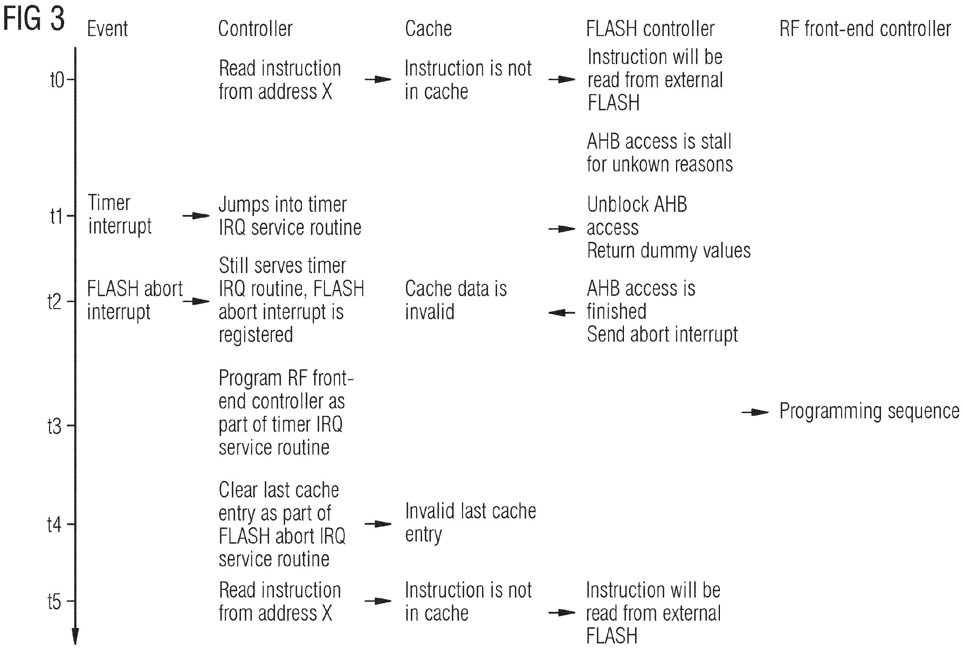

Figure 2 shows an exemplary embodiment of the inventive method and apparatus. Peripheral A 2 is a FLASH controller and peripheral B 3 is an RF frontend controller. The master controller 1 itself has an internal cache. The master controller 1 with internal cache, peripherals A 2 and B 3 and the bus 4 using, for example the ARM AHB protocol for bus communication. The internal cache and the master controller 1 itself share the same AHB port. The master controller 1 executes FLASH instruction code (AHB read access) and is stalled for unknown reason at time t0, see figure 3. The master controller 1 gets a timer interrupt to reprogram the RF frontend controller 3 at time t1, which is time critical. The master controller 1 cannot wait until the access to the FLASH controller 2 is finished. According to the inventive method and apparatus the timer interrupt is fed to FLASH controller 2 too by the interrupt lines 7. The FLASH controller 2 aborts the instruction code AHB read access and returns dummy data. The FLASH controller 2 sends at the end an abort interrupt 6 to the mater controller 1 at time t2. The master controller 1 can now program the RF front-end controller 3 at time t3. After leaving the timer interrupt request service routines (IRQ), the master controller 1 serves the FLASH abort IRQ service routine to invalidate the last cache entry at time t4. At the time t5 the master controller 1 jumps back to the main routine.

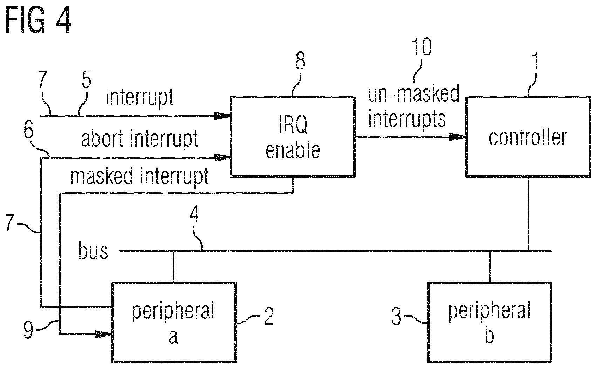

Another preferred embodiment of the inventive apparatus is shown in figure 4. An additional mask register for enabling / disabling the IRQ source of peripherals 2, 3 is formed. The interrupts get to the master controller 1 in an un-mashed fashion 10. The IRQ enable module 8 masks the according IRQ source that is fed to peripheral A 2. This has the advantage that the master controller 1 can decide which of the connected interrupts 5 are combined (or gated) and feed to the peripheral 2, 3 over the masked interrupt line 9 to terminate a blocked transfer. It is also possible to use more than one master controller 1 which sharing one slave 2, 3. The triggering event 5 of each master controller 1 can be combined (simple or gate) and the peripheral 2, 3 reacts as described above. The interrupt signal 6 of each peripheral 2, 3 is connected than to each master controller 1.

### List of Reference Signs

- 1: Master controller
- 2: Peripheral A, e.g. FLASH controller
- 3: Peripheral B, e.g. RF front-end controller
- 4: Bus, e.g. AHB protocol
- 5: Interrupt event message, e.g. timer interrupt
- 6: Abort interrupt event message, e.g. FLASH abort interrupt
- 7: Interrupt line
- 8: IRQ enable module
- 9: Masked interrupt line
- 10: Un-masked interrupt message

## Claims

1. A method for aborting blocked bus access between a master controller (1) and connected peripherals (2, 3) communicating via a bus protocol, the method comprising the following steps:
- an interrupt event message (5) is sent to the master controller (1) for starting an interrupt service routine, whereas the interrupt event message (5) is also sent to a connected peripheral (2, 3), which blocks the bus (4),
- the master controller (1) jumps into the interrupt service routine and
- the peripheral (2, 3) aborts its bus access and unblocks the bus (4) by sending an abort interrupt message (6) to the master controller (1), and
- the master controller (1) accesses the unblocked bus (4) for serving the interrupt service routine, and
- after leaving the interrupt service routine the master controller (1) jumps back to a main routine.

2. The method for aborting blocked bus access according to claim 1, wherein in case of a bus read access by the peripheral (2, 3), the peripheral (2, 3) returns dummy data into a cache memory of the master controller (1) which are not valid.

3. The method for aborting blocked bus access according to claim 1 or 2, wherein a dedicated bus error response can be sent by the peripherals (2, 3) if it is expected by the master controller (1).

4. The method for aborting blocked bus access according to claim 1, wherein in case of a bus write access by the peripheral (2, 3), the peripheral (2, 3) throws away the data.

5. The method for aborting blocked bus access according to claim 1, wherein the abort interrupt message (6) initiates an abort interrupt service routine, whereas the master controller (1) invalidates a last cache memory entry.

6. The method for aborting blocked bus access according to claim 1, wherein an interrupt event triggering the interrupt event message (5) can be a watchdog signal.

7. An apparatus for performing the method according to claim 1 to 6, the apparatus comprising a master controller (1) connected to more than one peripherals (2, 3) via a bus (4) using a bus protocol for bus communication, whereas the master controller (1) comprises an internal cache to which the peripherals (2, 3) are connected via a same port and wherein the master controller (1) and peripherals (2, 3) are connected via interrupt lines (7).

8. The apparatus according to claim 7, wherein the apparatus comprises an additional mask module (8) for enabling or disabling an interrupt source of peripherals.

9. The apparatus according to claims 7 or 8, wherein the peripheral (2, 3) comprises a control register for enabling a bus error response if expected by the master controller (1).

10. The apparatus according to claim 7, wherein the apparatus comprises more than one master controller (1) .

## Patentansprüche

1. Verfahren zum Abbrechen blockierter Buszugriffe zwischen einer Hauptsteuereinheit (1) und verbundenen Peripheriegeräten (2, 3), die mittels eines Busprotokolls kommunizieren, wobei das Verfahren die folgenden Schritte umfasst:
- eine Unterbrechungsereignisnachricht (5) wird zur Hauptsteuereinheit (1) gesendet, um eine Unterbrechungsdienstroutine zu starten, während die Unterbrechungsereignisnachricht (5) auch zu einem verbundenen Peripheriegerät (2, 3), das den Bus (4) blockiert, gesendet wird,
- die Hauptsteuereinheit (1) springt in die Unterbrechungsdienstroutine,
- das Peripheriegerät (2, 3) bricht seinen Buszugriff ab und gibt den Bus (4) durch Senden einer Abbruchunterbrechungsnachricht (6) zur Hauptsteuereinheit (1) frei,
- die Hauptsteuereinheit (1) greift auf den freigegebenen Bus (4) zu, um die Unterbrechungsdienstroutine zu bedienen, und
- die Hauptsteuereinheit (1) springt nach dem Verlassen der Unterbrechungsdienstroutine zu einer Hauptroutine zurück.

2. Verfahren zum Abbrechen blockierter Buszugriffe nach Anspruch 1, wobei im Falle eines Buslesezugriffs durch das Peripheriegerät (2, 3) das Peripheriegerät (2, 3) Platzhalterdaten, die nicht gültig sind, in einen Zwischenspeicher der Hauptsteuereinheit (1) zurückgibt.

3. Verfahren zum Abbrechen blockierter Buszugriffe nach Anspruch 1 oder 2, wobei eine fest zugeordnete Busfehlerantwort durch die Peripheriegeräte (2, 3) gesendet werden kann, wenn sie durch die Hauptsteuereinheit (1) erwartet wird.

4. Verfahren zum Abbrechen blockierter Buszugriffe nach Anspruch 1, wobei im Falle eines Busschreibzugriffs durch das Peripheriegerät (2, 3) das Peripheriegerät (2, 3) die Daten verwirft.

5. Verfahren zum Abbrechen blockierter Buszugriffe nach Anspruch 1, wobei die Abbruchunterbrechungsnachricht (6) eine Abbruchunterbrechungsdienstroutine initiiert, während die Hauptsteuereinheit (1) einen letzten Zwischenspeichereintrag ungültig macht.

6. Verfahren zum Abbrechen blockierter Buszugriffe nach Anspruch 1, wobei ein Unterbrechungsereignis, das die Unterbrechungsereignisnachricht (5) auslöst, ein Wächtersignal sein kann.

7. Vorrichtung zum Durchführen des Verfahrens nach Anspruch 1 bis 6, wobei die Vorrichtung eine Hauptsteuereinheit (1) umfasst, die mittels eines Busses (4) unter Verwendung eines Busprotokolls zur Buskommunikation mit mehr als einem Peripheriegerät (2, 3) verbunden ist, während die Hauptsteuereinheit (1) einen internen Zwischenspeicher umfasst, mit dem die Peripheriegeräte (2, 3) mittels desselben Anschlusses verbunden sind, und wobei die Hauptsteuereinheit (1) und die Peripheriegeräte (2, 3) mittels Unterbrechungsleitungen (7) verbunden sind.

8. Vorrichtung nach Anspruch 7, wobei die Vorrichtung ein zusätzliches Maskenmodul (8) zum Aktivieren oder Deaktivieren einer Unterbrechungsquelle von Peripheriegeräten umfasst.

9. Vorrichtung nach Anspruch 7 oder 8, wobei das Peripheriegerät (2, 3) ein Steuerregister zum Aktivieren einer Busfehlerantwort, wenn sie durch die Hauptsteuereinheit (1) erwartet wird, umfasst.

10. Vorrichtung nach Anspruch 7, wobei die Vorrichtung mehr als eine Hauptsteuereinheit (1) umfasst.

## Revendications

1. Procédé d'abandon d'un accès bus bloqué entre un contrôleur maître (1) et des périphériques connectés (2, 3) communiquant selon un protocole de bus, le procédé comprenant les étapes suivantes :
- un message d'événement d'interruption (5) est envoyé au contrôleur maître (1) pour lancer un sous-programme de service d'interruption, tandis que le message d'événement d'interruption (5) est également envoyé à un périphérique connecté (2, 3) qui bloque le bus (4),
- le contrôleur maître (1) saute au sous-programme de service d'interruption et
- le périphérique (2, 3) interrompt son accès au bus et débloque le bus (4) en envoyant un message d'interruption d'abandon (6) au contrôleur maître (1), et
- le contrôleur maître (1) accède au bus débloqué (4) pour traiter le sous-programme de service d'interruption, et
- après avoir quitté le sous-programme de service d'interruption, le contrôleur principal (1) revient à un sous-programme principal.

2. Procédé d'abandon d'un accès bus bloqué selon la revendication 1, dans lequel dans le cas d'un accès en lecture au bus par le périphérique (2, 3), le périphérique (2, 3) renvoie dans une mémoire cache du contrôleur maître (1) des données fictives qui ne sont pas valides.

3. Procédé d'abandon d'un accès bus bloqué selon la revendication 1 ou 2, dans lequel une réponse d'erreur de bus dédiée peut être envoyée par les périphériques (2, 3) si elle est attendue par le contrôleur maître (1).

4. Procédé d'abandon d'un accès bus bloqué selon la revendication 1, dans lequel dans le cas d'un accès en écriture au bus par le périphérique (2, 3), le périphérique (2, 3) rejette les données.

5. Procédé d'abandon d'un accès bus bloqué selon la revendication 1, dans lequel le message d'interruption d'abandon (6) lance un sous-programme de service d'interruption d'abandon, tandis que le contrôleur maître (1) invalide une dernière entrée en mémoire cache.

6. Procédé d'abandon d'un accès bus bloqué selon la revendication 1, dans lequel un événement d'interruption déclenchant le message d'événement d'interruption (5) peut être un signal de chien de garde.

7. Appareil permettant de réaliser le procédé selon les revendications 1 à 6, l'appareil comprenant un contrôleur maître (1) connecté à plus d'un périphérique (2, 3) par l'intermédiaire d'un bus (4) utilisant un protocole de bus pour les communications sur le bus, tandis que le contrôleur maître (1) comprend une mémoire interne à laquelle sont connectés les périphériques (2, 3) par l'intermédiaire d'un même port et dans lequel le contrôleur maître (1) et les périphériques (2 3) sont connectés par l'intermédiaire de lignes d'interruption (7) .

8. Appareil selon la revendication 7, dans lequel l'appareil comprend un module de masque supplémentaire (8) pour activer ou désactiver une source d'interruption de périphériques.

9. Appareil selon les revendications 7 ou 8, dans lequel le périphérique (2, 3) comprend un registre de commande pour valider une réponse d'erreur de bus si elle est attendue par le contrôleur maître (1).

10. Appareil selon la revendication 7, l'appareil comprenant plus d'un contrôleur maître (1).
